## Europäisches Patentamt
## European Patent Office
## Office européen des brevets

(19)

(11) Veröffentlichungsnummer: **0 195 929**
**B1**

(12) **EUROPÄISCHE PATENTSCHRIFT**

(45) Veröffentlichungstag der Patentschrift: **29.08.90**

(21) Anmeldenummer: **86102119.4**

(22) Anmeldetag: **19.02.86**

(51) Int. Cl.⁵: **H 02 K 5/167,** H 02 K 5/14, H 02 K 11/00, H 02 K 23/66

(54) **Handwerkzeugmaschine mit einem Elektromotor.**

(30) Priorität: **26.03.85 DE 3510897**

(43) Veröffentlichungstag der Anmeldung:
**01.10.86 Patentblatt 86/40**

(45) Bekanntmachung des Hinweises auf die Patenterteilung:
**29.08.90 Patentblatt 90/35**

(84) Benannte Vertragsstaaten:
**DE FR IT**

(56) Entgegenhaltungen:
**DE-A-3 123 517**
**DE-A-3 147 418**
**DE-A-3 311 557**
**PATENT ABSTRACTS OF JAPAN, Band 9, Nr. 136 (E-320)1859r, 12. Juni 1985; & JP - A - 60 20742**
**PATENT ABSTRACTS OF JAPAN, Band 9, Nr. 136 (E-320)1859r, 12. Juni 1985; & JP - A - 60 20741**

(73) Patentinhaber: **ROBERT BOSCH GMBH**
**Postfach 50**
**D-7000 Stuttgart 1 (DE)**

(72) Erfinder: **Szily, Enroe**
**St. Josefsgasse 28**
**CH-4500 Solothurn (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

## Beschreibung

Stand der Technik

Die Erfindung geht aus von einer Handwerkzeugmaschine nach der Gattung des Hauptanspruchs. Es sind bereits Handwerkzeugmaschinen mit Gehäuseschalen bekannt, deren vom Gehäuse getrennten, Lagerbrücken zugleich als Träger für elektrotechnische Bauelemente ausgebildet sind.

Bei der Handwerkzeugmaschine mit den kennzeichnenden Merkmalen des Hauptanspruchs sind die Bürstenhalter besonders vorteilhaft an der Lagerbrücke befestigt und wahlweise auf verschiedene Art elektrisch auschließbar. Durch die seitlich über die Bürstenhalter schiebbaren Befestigungsbügel ist, im Zusammenwirken mit besonders auf diese Befestigungsbügel abgestimmten Trägern an der Lagerbrücke, eine einfache und schnelle Montage der Bürstenhalter gewährleistet. Dabei sind diese Bürstenhalter vorbereitet zum Anschließen an die Stromversorgung sowohl direkt als auch über eine Entstördrossel.

Mit der DE—OS 33 11 557 ist eine Handwerkzeugmaschine bekannt geworden, deren bürstenseitige Lagerbrücke konzentrisch, ringartig geschlossen um das Wälzlager des Ankers sowie axial über die Ankerwelle geführt ist. Ein mit Aufnahmen für Bürsten versehenes Lagerschild ist in die Lagerbrücke einsteckbar und ein Kohlehalter ist über das Lagerschild greifend auf die Lagerbrücke setzbar. Die vorgenannten Teile können miteinander verschraubt werden. Endgültig lagegesichert ist der Anker mit der Lagerbrücke erst nach dem Zusammenbau des Handwerkzeugmaschinengehäuses. Die Lagerbrücke besteht aus einer Vielzahl komplizierter Teile und erfordert eine hohe Anzahl aufwendiger Montageschritte. Sie legt den Anker nicht bei geöffnetem, sondern nur bei geschlossenem Handwerkzeugmaschinengehäuse fest. Ein Betreiben und Untersuchen des Motors bzw. des Ankers der Handwerkzeugmaschine bei geöffnetem Gehäuse ist nicht möglich.

Außerdem ist mit der JP—A—6 020 742 ein Bürstenhalter bekannt geworden, der zwar Bürsten halten kann, jedoch weder eine Kontaktfahne noch eine Entstördrossel zeigt, mit der wahlweise ein Zwischenschalten oder ein Überbrücken von Entstördrosseln zwischen Spannungsquelle und Bürsten möglich wäre.

Weiterhin ist mit der DE—OS 31 23 517 ein leiterplattenartiger Träger eines Bürstenhalters bekannt geworden, der elektrisch mit einer Entstördrossel verbunden ist, jedoch nicht als Lagerbrücke verwendbar ist. Außerdem fehlt eine zweite Kontaktfahne für den Direktanschluß der Bürste unter Überbrückung der Entstördrossel.

Alle drei genannten Lösungen sind im Einzelnen und auch in der Summe zur Lösung der Aufgabe der Erfindung ungeeignet. Die Aufgabe besteht darin, eine Handwerkzeugmaschine mit einfach montierbarer Motorlagerung und Bürstenhalterung zu schaffen, die auch elektrische Bauelemente sowie elektrische Verbindungsmittel tragen können und bei der der Motor mit geringem Montageaufwand justierbar ist, so daß bei geöffnetem Gehäuse der Motor in seiner Endlage betrieben und untersucht werden kann.

Durch die in den Unteransprüchen aufgeführten Maßnahmen sind vorteilhafte Weiterbildungen und Verbesserungen der im Hauptanspruch angegebenen Handwerkzeugmaschine möglich. Besonders vorteilhaft ist die Anordnung von Taschen in der Lagerbrücke, die von der Unterseite der Lagerbrücke her zugänglich sind und je eine Entstördrossel aufnehmen können.

Zeichnung

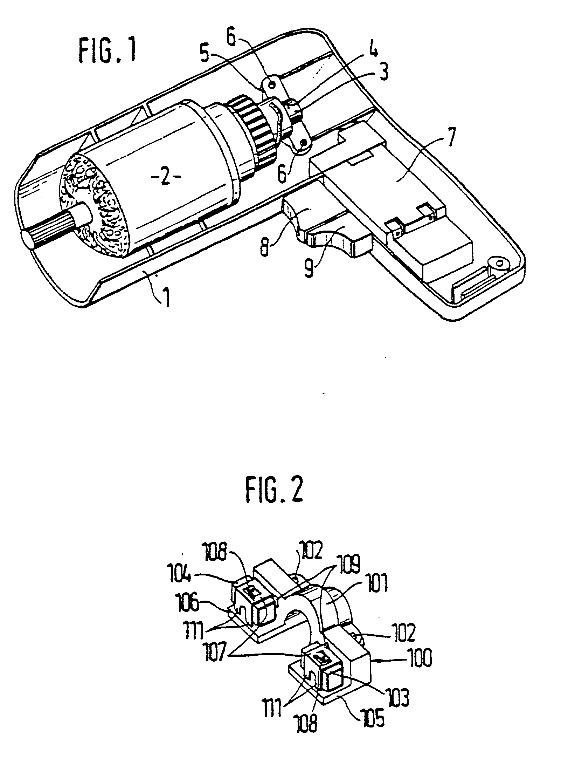

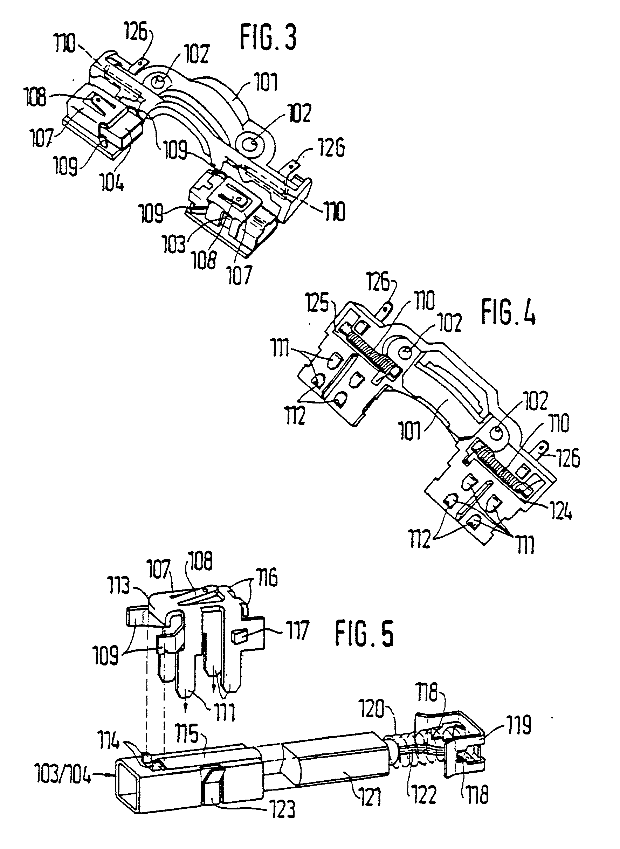

Ein Ausführungsbeispiel des Erfindungsgegenstandes ist in der Zeichnung dargestellt und in der nachfolgenden Beschreibung näher erläutert. Es zeigen Figur 1 eine perspektivische Darstellung einer Schale einer Handwerkzeugmaschine mit eingelegten Motor- und Schalterteilen, Figur 2 eine perspektivische Darstellung einer erfindungsgemäß ausgestatteten Lagerbrücke, Figur 3 eine vergrößerte perspektivische Darstellung der Lagerbrücke mit besonderer Detailwiedergabe, von oben gesehen, Figur 4 eine Darstellung wie Figur 3, von unten gesehen, Figur 5 eine Explosionszeichnung eines Bürstenhalters, einer Bürste mit Feder und Klammer und eines Befestigungsbügels.

Beschriebung des Ausführungsbeispiels

In einer Gehäuse schale 1 lagert ein Elektro Motor 2 mit seinem bürstenseitigen Wellenende 3 in einer Halbschale 4 eines Lagerbockes 5. Dieser Lagerbock ist mit Gewindelöchern 6 versehen. Im Griffbereich des Gehäuses 1 ist ein Doppelschalter 7 mit zwei Schalthandhaben 8 und 9 befestigt. An diesem Doppelschalter 7 ist ein hier nicht dargestelltes elektrisches Versorgungskabel angeschlossen. Dieses Versorgungskabel ist in der üblichen Weise von der Unterseite des Handgriffteils her in das Handwerkzeugmaschinengehäuse eingeführt. Die im Folgenden beschriebenen Einzelteile und Merkmale sind mit dreistelligen Zahlen bezeichnet. Eine Lagerbrücke 100 mit einer Halbschale 101 bildet, zusammen mit dem Lagerbock 5, das Lager für das Wellenende 3 des Motors 2. Zum Aufschrauben auf den Lagerbock 5 sind in die Lagerbrücke 100 zwei Durchgangslöcher 102 eingebracht. Zwei Bürstenhalter 103 und 104 sind auf Trägern 105 und 106 der Lagerbrücke 100 jeweils mittels eines Befestigungsbügels 107 befestigt. Der Befestigungsbügel besitzt eine Kontaktfahne 108 für den elektrischen Direktanschluß und spiegelbildlich angeordnet je eine Kontaktfahne 109 für den elektrischen Anschluß an eine Entstördrossel 110. Vier Lappen 111 des Befestigungsbügels 107 können Durchbrüche 112 in den Trägern 105 bzw. 106 durchgreifen und an der den Bürstenhaltern 103 bzw. 104 gegenüberliegenden Seite der Träger 105 bzw. 106 abgebogen werden. Auf diese bekannte Weise ist dann der Befestigungsbügel 107 fest verbunden mit dem Träger 105 bzw. 106. Dabei hält er den Bürstenhal-

ter 103 bzw. 104 auf dem jeweiligen Träger fest. Ein abgewinkelter vorsprung 113 des Befestigungsbügels 107 kann zwischen zwei Nasen 114 und das Ende einer Auswölbung 115 der Bürstenhalter 103 bzw. 104 eingreifen und so die Bürstenhalter 103 bzw. 104 formschlüssig auch axial festlegen. Zwei abgewinkelte Lappen 116 haben die gleiche Länge wie der vorsprung 113 und stützen den Befestigungsbügel 107 an dessen anderem Ende beiderseits der Auswölbung 115 auf den Bürstenhaltern 103 bzw. 104 ab. Beiderseits des Befestigungsbügels 107 angeordnete Rastnasen 117 sind zum Zusammenwirken mit ensprechenden Ausnehmungen 118 eines federnden Haltebügels 119 bestimmt. Der Haltebügel 119 trägt über eine Druckfeder 120 eine Bürste 121. Außerdem sind der Haltebügel 119 und die Bürsten 121 mittels einer Litze 122 verbunden. Ein Haltelappen 123 an den Bürstenhaltern 103 und 104 dient der Montageerleichterung. Solange die Lagerbrücke 100 noch nicht in das Gehäuse 1 der Handwerkzeugmaschine eingesetzt ist, wird mit ihm die in einen der Bürstenhalter 103 bzw. 104 eingesetzte Bürste 121 reibungsschlüssig festgehalten. Nach dem Einsetzen der Lagerbrücke 100 wird dieser Haltelappen 123 nach außen gebogen und gibt die Bürste 121 frei, so daß die Druckfeder 120 sie gegen den Kollektor des Motors 2 drücken kann.

Die Entstördrosseln 110 sind in Taschen 124 bzw. 125 der Lagerbrücke 100 eingesetzt, die von deren Unterseite her zugänglich sind, und mit Anschlußfahnen 126 verbunden.

Zur Vormontage der Lagerbrücken 100 werden zunächst die Bürstenhalter 103 und 104 auf ihren jeweiligen Träger 105 und 106 aufgelegt. Danach schiebt man jeweils einen Befestigungsbügel 107 seitlich über seinen Bürstenhalter 103 bzw. 104, so daß die Lappen 111 durch die Durchbrüche 112 in den Trägern 105 bzw. 106 hindurchgreifen und dabei der abgewinkelte vorsprung 113 zwischen die Nasen 114 und das Ende der Auswölbung 115 zu liegen kommt. Die durch die Durchbrüche 112 nach außen tretenden Enden der Lappen 111 werden danach abgebogen, wodurch die Bürstenhalter 103 und 104 auf ihrem jeweiligen Träger 105 bzw. 106 in jeder Richtung formschlüssig festgelegt sind. Danach schiebt man die Bürste 121 in jeden der Bürstenhalter 103 bzw. 104 ein, bis deren Haltebügel 119 mit ihren Ausnehmungen 118 hinter den Rastnasen 117 am Befestigungsbügel 107 einrasten. Von den Haltelappen 123 wird die Bürste 121 in ihrer Vormontagestellung gehalten. Nach dem Aufschrauben der Lagerbrücke 100 auf den Lagerbock 5 wird durch Aufbiegen der Haltelappen 123 die Bürste 121 freigegeben. Sie legt sich dann unter der Wirkung ihrer Druckfeder 120 an den Kollektor des Elektromotors 2 an.

Noch während der Vormontage kann, dann wenn eine Entstördrossel notwendig ist, eine solche Entstördrossel 110 in jede der Taschen 124 und 125 eingelegt und einmal mit der Kontaktfahne 109, zum anderen mit der Anschlußfahne 126 verbunden werden. Dies geschieht vorzugsweise durch Löten.

In jedem Falle braucht nach der Montage der Lagerbrücke 100 in das Gehäuse 1 ein elektrisches Anschlußkabel entweder nur auf die Kontaktfahne 108 oder nur auf die Anschlußfahne 26 aufgesteckt zu werden, um die Maschine für einen Probelauf und selbstverständlich auch für den späteren Betrieb starten zu können.

**Patentansprüche**

1. Handwerkzeugmaschine mit einem Elektromotor (2) und einem die Motorlagerung aufnehmenden, aus Gehäuseschalen gebildeten Gehäuse und mit einem bürstenseitigen Motorlager, das einen mit einer Gehäuseschale (1) verbundenen Lagerbock (5) und eine vom Gehäuse getrennte Lagerbrücke (100) aufweist, wobei die Lagerbrücke (100), die Bürstenhalter (103, 104) und die Bürsten (121) eine vormontierbare Baugruppe bilden, derart, daß mit der Befestigung der Lagerbrücke (100) auf dem Lagerbock (5) die Bürsten (121) in ihre Wirkstellung überführt werden, dadurch gekennzeichnet, daß die Lagerbrücke (100) Träger (105, 106) für Bürstenhalter (103, 104) hat, an denen die Bürstenhalter (103, 104) durch seitlich aufschiebbare Befestigungsbügel (107) festlegbar sind, die sowohl eine Kontaktfahne (109) für einen elektrischen Anschluß über eine Entstördrossel (110) als auch eine Kontaktfahne (108) für einen elektrischen Direktanschluß ohne zwischengeschaltete Entstördrossel haben.

2. Handwerkzeugmaschine nach Anspruch 1, dadurch gekennzeichnet, daß die Träger (105, 106) der Lagerbrücke (100) Durchbrüche (112) haben, durch die Lappen (111) der Befestigungsbügel (107) hindurchgesteckt und dahinter sichernd gebogen werden können.

3. Handwerkzeugmaschine nach Anspruch 1 oder 2, dadurch gekennzeichnet, daß die Lagerbrücke (100) die Bürstenhalter (103, 104) an ihrer, dem Überbrückten Lager abgewandeten Oberseite trägt und daß von der Unterseite der Lagerbrücke (100) her in diese Lagerbrücke (100) Taschen (124, 125) eingeformt sind, die neben den Trägern (105, 106) liegen und Entstördrosseln (110) aufnehmen können.

4. Handwerkzeugmaschine nach einem der Ansprüche 1—3, dadurch gekennzeichnet, daß die Bürstenhalter (103, 104) und die Befestigungsbügel (107) einander zugeordnete Nasen (114) oder Vorsprünge (113) haben, durch die sie bei aufgeschobenen Befestigungsbügeln (107) auch in Längsrichtung der Bürstenhalter (103, 104) formschlüssig verbunden sind.

5. Handwerkzeugmaschine nach einem der Ansprüche 1—4, dadurch gekennzeichnet, daß die Befestigungsbügel (107) mindestens eine Rastnase (117) zum Einrasten in eine entsprechende Ausnehmung (118) in einem federnden Haltebügel (119) für eine in den Bürstenhalter (103, 104) einzuschiebende Bürste (121) haben.

**Revendications**

1. Outil électro-portatif comportant un moteur électrique (2) et un boîtier formé de coquilles recevant le palier du moteur ainsi qu'un palier de moteur du côté des balais, ce palier se composant d'un bloc de palier (5) solidaire d'une coquille de boîtier (1) et un pontet de palier (100) distinct du boîtier, le pontet (100), les porte-balais (103, 104) et les balais (121) constituent un ensemble préfabriqué, de manière qu'avec la fixation du pontet (100) sur le bloc de palier (5), les balais (121) viennent dans leur position active, outil caractérisé en ce que le pontet (100) comporte des supports (105, 106) pour les porte-balais (103, 104), sur lesquels se fixent les porte-balets (103, 104) par un étrier de fixation (107) qui se glisse par le côté, et qui comporte une patte de contact (109) pour le branchement électrique par l'intermédiaire d'une bobine de déparasitage (110) et une patte de contact (108) pour le raccordement électrique direct sans interposition de la bobine de déparasitage.

2. Outil électro-portatif selon la revendication 1, caractérisé en ce que les supports (105, 106) du pontet (100) ont des passages (112) traversés par les pattes (111) de l'étrier de fixation (107), ces pattes étant bloquées derrière cet étrier.

3. Outil électro-portatif selon la revendication 1 ou 2, caractérisé en ce que le pontet (100) reçoit les porte-balets (103, 104) par leurs côtés supérieurs opposés au pontet et en ce que des poches (124, 125) sont formées dans la face inférieure du pontet (100), poches qui sont situées à côté des supports (105, 106) et peuvent recevoir des bobines de déparasitage (110).

4. Outil électro-portatif selon l'une des revendications 1 à 3, caractérisé en ce que les porte-balais (103, 104) et l'étrier de fixation (107) ont des becs (114) ou des saillies (113) associés entre eux par lesquels, lorsque les étriers de fixation (107) sont emmanchés, ils assurent la liaison par la forme également dans la direction longitudinale des porte-balais (103, 104).

5. Outil électro-portatif selon l'une des revendications 1 à 4, caractérisé en ce que les étriers de fixation (107) ont au moins un bec d'encliquetage (117) pour venir s'accrocher dans une cavité correspondante (118) d'un étrier de fixation élastique (119) pour un balai (121) qui se glisse dans le porte-balais (103, 104).

**Claims**

1. Powered hand tool having an electric motor (2) and a housing, receiving the motor mounting the formed from housing shells, and having a brush-side motor bearing, which has a bearing block (5), connected to one housing shell (1), and a bearing bracket (100), separate from the housing, the bearing bracket (100), the brush holders (103, 104) and the brushes (121) forming a preassemblable unit in such a way that the fastening of the bearing bracket (100) on the bearing block (5) has the effect of transferring the brushes (121) into their effective position, characterized in that the bearing bracket (100) has carriers (105, 106) for brush holders (103, 104), on which carriers the brush holders (103, 104) can be fixed by fastening clips (107) which can be pushed on from the side and have both a contact lug (109) for an electrical connection via an interference suppression coil (110) and a contact lug (108) for an electrical direct connection without interconnected interference suppression coil.

2. Powered hand tool according to Claim 1, characterized in that the carriers (105, 106) of the bearing bracket (100) have openings (112), through which the tabs (111) of the fastening clips (107) can be inserted and bent behind to secure.

3. Powered hand tool according to Claim 1 or 2, characterized in that the bearing bracket (100) carries the brush holders (103, 104) on its upper side, facing away from the bridged bearing, and in that pockets (124, 125) are made from the underside of the bearing bracket (100) into said bearing bracket (100), which pockets lie alongside the carriers (105, 106) and can receive interference suppression coils (110).

4. Powered hand tool according to one of Claims 1—3, characterized in that the brush holders (103, 104) and the fastening clips (107) have mutually assigned noses (114) or projections (113), by which they are positively connected even in the longitudinal direction of the brush holders (103, 104) when the fastening clips (107) are pushed on.

5. Powered hand tool according to one of Claims 1—4, characterized in that the fastening clips (107) have at least one engaging nose (117) for engaging in a corresponding recess (118) in a resilient holding clip (119) for a brush (121), to be pushed into the brush holder (103, 104).

FIG. 1

FIG. 2

FIG. 3

FIG.4

FIG.5